# EUROPEAN PATENT APPLICATION

(11) **EP 4 270 592 A1**
(43) Date of publication of application: **01.11.2023**
(21) Application number: 22209234.8
(22) Date of filing: 23.11.2022
(51) Int. Cl.: H01M 10/42, H01M 10/48, H01M 50/204, H01M 50/249, H01M 50/284, H01M 50/507, H01M 50/569

(54) **BATTERY MODULE HAVING SENSING MODULE ASSEMBLY**

(30) Priority: 20.04.2022 KR 20220048811
(71) Applicant: SK On Co., Ltd., Seoul 03161 (KR)
(72) Inventor: KANG, Ji Eun, 34124 Daejeon (KR); JEON, Hae Ryong, 34124 Daejeon (KR)
(74) Representative: Stolmár & Partner Patentanwälte PartG mbB

(57) **Abstract**

A battery module includes at least one cell stack including a plurality of battery cells, a housing in which at least one accommodating space is formed, a busbar assembly including at least one busbar, and a busbar support member, and a sensing module assembly provided to measure the state of the battery cell. The sensing module assembly comprises a sensing circuit board having a circuit, a temperature sensor installed to be spaced apart from the sensing circuit board, a sensor connection member connecting the sensing circuit board and the temperature sensor and installed by penetrating through a sensor installation opening formed in the busbar support member, and a sensor fixing member installed by penetrating through the sensor installation opening such that the temperature sensor measures a temperature at a preset position.

## Description

### TECHNICAL FIELD

The present disclosure relates to a battery module including a sensing module assembly for measuring a temperature of a battery cell.

### BACKGROUND

Unlike primary batteries, secondary batteries may be charged with and discharged of electricity, and may thus be applied to devices within various fields such as digital cameras, mobile phones, notebook computers, hybrid vehicles, and electric vehicles. Examples of the secondary battery include a lithium secondary battery, a nickel-cadmium battery, a nickel-metal hydride battery, a nickel-hydrogen battery, and the like.

Among such secondary batteries, a large amount of research into lithium secondary batteries having high energy density and discharge voltage is in progress. Such a lithium secondary battery is manufactured as a pouch-type battery cell having flexibility or a prismatic or cylindrical can-type battery cell having rigidity. A plurality of battery cells form a cell stack in the form of a stack. At least one cell stack is disposed inside the module housing to form a battery module.

In the battery module, a sensing module for detecting the state of the battery cell, for example, an operating state, may be installed inside the module housing. The sensing module includes a temperature sensor for measuring the temperature of the battery cell.

The plurality of battery cells are installed in an accommodating space formed inside the module housing. In addition, the plurality of battery cells are electrically connected by a busbar assembly. The busbar assembly includes a busbar to which an electrode lead of each battery cell is coupled, and an electrically insulating busbar support member on which the busbar is installed. Accordingly, the cell stack has a structure surrounded by the module housing and the busbar assembly.

In order to install the temperature sensor to be adjacent to the battery cell, it is necessary to externally expose a portion of the cell stack in which the temperature sensor is installed, before the external surface of the cell stack is completely covered by the module housing and the busbar assembly.

However, there is a problem in that it may be difficult to install the temperature sensor when the cell stack is completely covered by the module housing and the busbar assembly. Moreover, in the case in which the portion in which the temperature sensor is installed is not exposed externally, it is significantly difficult to install the temperature sensor in the correct position. If the temperature sensor is not installed in the correct position, the temperature of the battery cell may not be accurately measured.

On the other hand, in the case of forming a relatively large opening in the busbar assembly to facilitate the installation of the temperature sensor, there is a problem in that the rigidity of the busbar assembly is lowered.

### SUMMARY

An aspect of the present disclosure is to provide a battery module in which a temperature sensor may be accurately located in a temperature measurement position.

An aspect of the present disclosure is to provide a battery module in which the accuracy of temperature measurement of battery cells may be increased.

An aspect of the present disclosure is to provide a battery module in which assembly and the installation of a temperature sensor for temperature measurement of a battery cell may be facilitated.

An aspect of the present disclosure is to provide a battery module in which handling of a temperature sensor may be facilitated.

An aspect of the present disclosure is to provide a battery module in which a decrease in rigidity of a busbar assembly may be significantly reduced.

According to an aspect of the present disclosure, a battery module includes at least one cell stack including a plurality of battery cells; a housing in which at least one accommodating space is provided to accommodate the at least one cell stack; a busbar assembly including at least one busbar electrically connected to the plurality of battery cells, and a busbar support member disposed between the busbar and the cell stack to support the busbar; and a sensing module assembly provided to measure a state of the battery cell. The sensing module assembly comprises a sensing circuit board having a circuit provided for detecting the state of the battery cell, a temperature sensor installed to be spaced apart from the sensing circuit board to measure a temperature of the battery cell, a sensor connection member connecting the sensing circuit board and the temperature sensor, and a sensor fixing member connected to the busbar support member in such a manner that the temperature sensor measures a temperature in a preset position.

The sensor fixing member may be in contact with a portion of the sensor connection member, in which the temperature sensor is installed.

The sensor fixing member may be installed by penetrating through a sensor installation opening provided in the busbar support member.

The sensor connection member may have a deformable shape or material, the sensor connection member may include a first end to which the sensing circuit board is connected and a second end on which the temperature sensor is installed, and the sensor fixing member may be configured to limit movement or deformation of the second end before the second end or the temperature sensor contacts the battery cell.

The sensor connection member may include a flexible printed circuit board or a wire.

The sensor fixing member may include a fixing body having a fastening part fastened to the sensing circuit board, and an extended body extending toward the temperature sensor by penetrating through the sensor installation opening.

The sensor fixing member may further include an elastic pad installed on the extended body at a position facing the temperature sensor, and the elastic pad elastically may press the second end.

The elastic pad may have an opening surrounding at least a portion of a circumference of the temperature sensor.

The elastic pad may be installed on the extended body, and has a size exposed to the outside of the extended body.

The sensing circuit board may include a printed circuit board, and the sensing circuit board may include a coupling portion corresponding to the fastening part.

The sensing circuit board may include a flexible printed circuit board, and the sensing circuit board may be provided with a reinforcing member attached to the sensing circuit board, to support the fastening part. The reinforcing member may include a coupling portion corresponding to the fastening part.

The sensing module assembly may further include a connector configured to receive a state of a battery cell measured on a location different from a location of the temperature sensor.

The sensing module assembly may include an additional temperature sensor measuring the temperature of the battery cell in a position different from a location of the temperature sensor; an additional connecting member connecting the connector and the additional temperature sensor; and an additional fixing member fixed to the busbar support member and used for installing the additional temperature sensor.

The additional fixing member may include a fixing body having a fastening part fastened to the busbar supporting member, and an extended body extending toward the additional temperature sensor by penetrating through a sensor installation opening provided in the busbar supporting member.

The additional connection member may have a deformable shape or material, and the additional fixing member may restrict movement or deformation of a portion of the additional connection member in which the additional temperature sensor is installed, before the additional connection member or the additional temperature sensor comes into contact with the battery cell.

The sensing module assembly may further include a voltage sensing terminal connecting the sensing circuit board and the at least one busbar.

The sensing module assembly may be fixed to the busbar support member.

According to an aspect of the present disclosure, a battery module includes a plurality of cell stacks including a plurality of battery cells; a housing having a plurality of accommodating spaces partitioned by a partition member to accommodate the plurality of cell stacks; a busbar assembly including at least one busbar electrically connected to the plurality of battery cells, and a busbar support member disposed between the busbar and at least one of the plurality of cell stacks to support the busbar; and a sensing module assembly provided to measure a state of the battery cell. The sensing module assembly includes a sensing circuit board having a circuit configured to detect the state of the battery cell; a temperature sensor installed to be spaced apart from the sensing circuit board to measure a temperature of the battery cell; a sensor connection member connecting the sensing circuit board and the temperature sensor; and a sensor fixing member connected to the busbar support member such that the temperature sensor measures a temperature at a preset position.

The busbar assembly may be disposed to cover the plurality of cell stacks, the sensing circuit board may be installed on the outside of the busbar support member, and the sensor fixing member may be installed by penetrating through a sensor installation opening provided in the busbar support member.

The cell stack may include a first stack body disposed in a first accommodating space positioned on one side of the partition member, and a second stack body disposed in a second accommodating space positioned on the other side of the partition member. The busbar assembly may include a first assembly electrically connected to the first stack body, and a second assembly electrically connected to the second stack body.

Each of cell stacks may be provided by stacking the plurality of battery cells while lying on sides thereof, and may be disposed on both sides of the partition member, respectively.

A plurality of accommodating spaces partitioned by a partition member to accommodate a plurality of cell stacks may be formed in the housing.

The sensing module assembly may include a plurality of temperature sensors to measure a temperature of each of cell stacks.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view of a battery module according to an embodiment;
FIG. 2 is an exploded perspective view of the battery module illustrated in FIG. 1;
FIG. 3 is a perspective view illustrating a state in which an end plate and an insulating member in FIG. 1 are removed;
FIG. 4 is a perspective view illustrating the battery module illustrated in FIG. 3 in a state in which a second stack of a cell stack and a second assembly of a busbar assembly are combined;
FIG. 5 is an exploded perspective view of the cell stack and the busbar assembly illustrated in FIG. 4;
FIG. 6 is a perspective view of the battery cell illustrated in FIG. 5;
FIG. 7 is a front view of the battery module illustrated in FIG. 3;
FIG. 8 is a perspective view of a sensing module assembly illustrated in FIG. 3;
FIG. 9 is an exploded perspective view of the sensing module assembly illustrated in FIG. 8;
FIGS. 10A, 10B and 10C are a perspective view, a side view, and a rear view of a sensor fixing member illustrated in FIG. 8, respectively;
FIG. 11 is a cross-sectional view of the sensing module assembly taken along line I-I' of FIG. 7;
FIG. 12 is a cross-sectional view of the battery module taken along line I-I' of FIG. 7;
FIG. 13 is a cross-sectional view illustrating a modified example of the sensing module assembly illustrated in FIG. 11;
FIG. 14 is a front view of a battery module including a sensing module assembly according to another embodiment;
FIG. 15 is a front view of a battery module including a sensing module assembly according to another embodiment;
FIG. 16 is an exploded perspective view of the sensing module assembly illustrated in FIG. 15;
FIG. 17 is a cross-sectional view of the battery module taken along line II-II' of FIG. 15;
FIGS. 18A and 18B are views illustrating a state in which a busbar assembly is installed in the battery module illustrated in FIG. 3, and FIG. 18A is a front view, and FIG. 18B is a rear view;
FIG. 19 is an illustrative view illustrating an electrical connection relationship between a plurality of busbars in FIGS. 18A and 18B; and
FIG. 20 is a perspective view of a battery pack according to an embodiment.

### DETAILED DESCRIPTION

Prior to the detailed description of the present disclosure, the terms or words used in the present specification and claims described below should not be construed as being limited to conventional or dictionary meanings.

Hereinafter, embodiments will be described in detail with reference to the accompanying drawings. In this case, it should be noted that the same components in the accompanying drawings are denoted by the same reference numerals as much as possible. In addition, detailed descriptions of well-known functions and configurations that may obscure the gist of the present disclosure will be omitted. For the same reason, some components are exaggerated, omitted, or schematically illustrated in the accompanying drawings, and the size of each component does not fully reflect the actual size thereof.

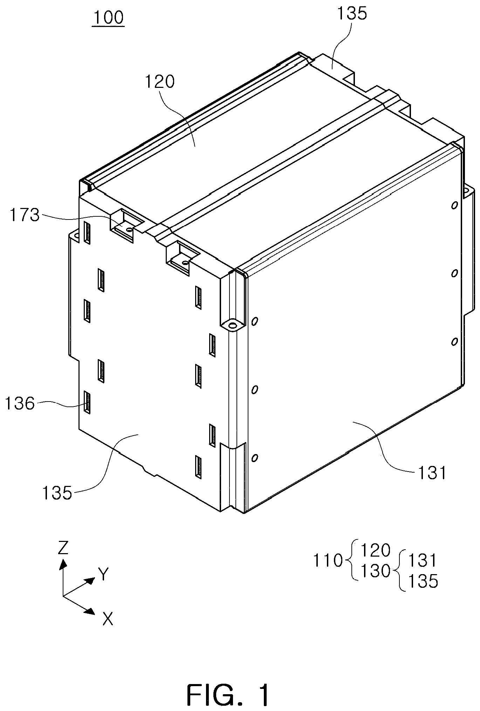

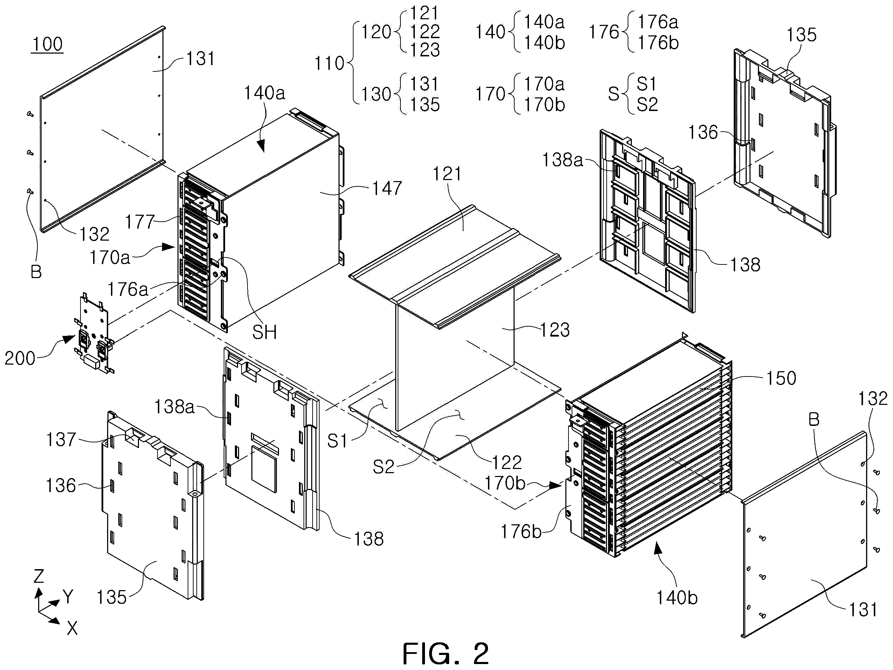

First, a battery module 100 according to an embodiment will be described with reference to FIGS. 1 and 2. FGI. 1 is a perspective view of the battery module 100 according to an embodiment, and FIG. 2 is an exploded perspective view of the battery module 100 illustrated in FIG. 1.

Referring to FIGS. 1 and 2, the battery module 100 according to an embodiment includes a cell stack 140 and a housing 110 accommodating the cell stack 140.

The cell stack 140 forms a state in which a plurality of battery cells 150 are stacked. The battery cell 150 may be configured as a secondary battery. As an example, the battery cell 150 may be formed of a lithium secondary battery, but is not limited thereto . For example, the battery cell 150 may be comprised of various types of secondary batteries, such as a nickel-cadmium battery, a nickel-metal hydride battery, and a nickel-hydrogen battery. In addition, the battery cell 150 may be formed of a pouch-type secondary battery. However, it is not excluded that a prismatic secondary battery is used as the battery cell 150.

The housing 110 defines the external shape of the battery module 100, and is disposed outside the cell stack 140 to protect the battery cell 150 from the external environment.

At least one accommodating space (S; S1, S2) may be formed in the housing 110 to accommodate the cell stack 140. For example, the housing 110 may have a plurality of accommodating spaces S1 and S2 partitioned by a partition member 123. Hereinafter, for convenience of description, a case in which the partition member 123 is provided in the housing 110 and the accommodating spaces S1 and S2 are formed on both sides of the partition member 123 will be described as an example. However, the embodiment is not limited to the configuration including the partition member 123, and the housing 110 according to an embodiment of the present disclosure may not include the partition member 123.

In the housing 110, the plurality of accommodating spaces (S; S1, S2) partitioned in the first direction (X) by the partition member 123 to accommodate the plurality of cell stacks 140 may be formed. For example, a first accommodating space S1 and a second accommodating space S2 may be formed inside the housing 110 on one side and the other side of the partition member 123, respectively.

The partition member 123 inside the housing 110 may be provided in the form of a frame to improve the rigidity of the housing 110. For example, the partition member 123 may constitute a portion of a frame member 120. The frame member 120 may include a first plate 121, a second plate 122 spaced apart from the first plate 121, and the partition wall 123 connecting the first plate 121 and the second plate 122 to each other. The frame member 120 may form an I-shaped (the H-shape in the state of lying on sides) frame structure. In this case, the frame member 120 may have the first accommodating space S1 and the second accommodating space S2 partitioned by the partition member 123. The cell stack 140 may be accommodated in each of the accommodating spaces S1 and S2.

The housing 110 may include a cover plate 130 coupled to the frame member 120. The cover plate 130 is coupled to the frame member 120. The plurality of accommodating spaces S1 and S2 are formed between the cover plate 130 and the frame member 120. For example, the cover plate 130 covers the open portion of the accommodating spaces S1 and S2.

The cover plate 130 may include a plurality of side plates 131 and a plurality of end plates 135. The side plates 131 may be disposed to be spaced apart from both sides of the partition member 123 in the first direction (X), respectively. The frame member 120 and the plurality of side plates 131 may be coupled to each other to have an open shape at both ends. The end plates 135 may cover both ends that are open in a state in which the frame member 120 and the side plates 131 are coupled. The end plates 135 may be disposed on the front and rear surfaces of the cell stack 140, respectively.

The housing 110 may perform a function for cooling or dissipating heat of the battery module 100. To this end, at least a portion of the frame member 120, the side plate 131, and the end plate 135 may be formed of a material having high thermal conductivity, such as metal. For example, the frame member 120, the side plate 131, and the end plate 135 may be formed of an aluminum material. However, the material of the frame member 120, the side plate 131, and the end plate 135 is not limited thereto, and a variety of materials may be used as long as the material has similar strength and thermal conductivity to metal, even if it is not a metal.

The cell stack 140 is provided to correspond to the number of accommodating spaces S1 and S2, to be accommodated in the respective accommodating spaces S1 and S2. For example, when the first accommodating space S1 and the second accommodating space S2 are formed on one side and the other side of the partition member 123 respectively, the cell stack 140 may include a first stack body 140a accommodated in the first accommodating space S1 and a second stack body 140b accommodated in the second accommodating space S2.

A busbar assembly 170 is connected to the cell stack 140, for electrical connection of the battery cells 150. The busbar assembly 170 may have a separate structure to facilitate assembly with the cell stack 140. For example, the busbar assembly 170 may be provided in a number corresponding to the number of the cell stacks 140. For example, when there are two cell stacks 140, the busbar assembly 170 may include a first assembly 170a electrically connected to the first stack body 140a, and a second assembly 170b electrically connected to the second stack body 140b. The first assembly 170a and the second assembly 170b may have a structure separated from each other. The first stack body 140a may be installed in the first accommodating space S1 in a state of being coupled to the first assembly 170a, and the second stack body 140b may be installed in the second accommodating space S2 in a state of being coupled to the second assembly 170b. The first assembly 170a and the second assembly 170b may be connected through a connection part 176. The connection part 176 may include a first connection part 176a and a second connection part 176b which are disposed to face each other. The first connection part 176a and the second connection part 176b may be disposed to face each other in the first direction (X) . In a state in which the cell stack 140 and the busbar assembly 170 are disposed in the accommodating space (S; S1, S2), the first connection part 176a of the first assembly 170a and the second assembly 170b of the second connection parts 176b may have a structure connected to each other. The first connection part 176a and the second connection part 176b may have a shape facing each other.

The cell stack 140 may have a structure surrounded by the first plate 121, the second plate 122, the side plate 131, and the busbar assembly 170. In detail, the upper and lower surfaces of the cell stack 140 may be covered by the first plate 121 and the second plate 122, respectively. Both sides of the cell stack 140 may be covered by two side plates 131. The front and rear surfaces of the cell stack 140 may be covered by the busbar assembly 170.

A partition insulating member 147 may be provided on a surface of the cell stack 140 opposite to the partition member 123. The partition insulating member 147 may include a material having at least one of flame retardancy, heat resistance, heat insulation, and insulation properties to prevent the partition member 123 from being damaged by high-temperature thermal energy or flame generated in the cell stack 140.

On the other hand, the side plate 131 has an assembly hole 132 for assembling, and may be coupled to the busbar assembly 170 through a fastening unit B such as a bolt or the like passing through the assembly hole 132.

The end plate 135 is installed to face the busbar assembly 170. A gas outlet 136 for discharging gas to the outside of the end plate 135 may be formed in the end plate 135. The gas generated in the cell stack 140 is discharged externally through a venting hole 177 of the busbar assembly 170 and the gas outlet 136 of the end plate 135. In the detailed description and claims, the term 'gas' is defined as including all of electrolyte gas, combustion gas, combustion materials contained in combustion gas, flame, and the like.

A terminal through-hole 137 may be formed in the end plate 135 such that an electrode terminal 173 of the busbar assembly 170 is exposed to the outside of the housing 110.

An electrically insulating member 138 may be installed between the end plate 135 and the busbar assembly 170. A gas flow port 138a may be formed in the insulating member 138. The gas flow port 138a is positioned corresponding to the gas outlet 136 such that the gas discharged through the venting hole 177 of the busbar assembly 170 may be discharged through the gas outlet 136 of the end plate 135.

A sensing module assembly 200 may be installed in the busbar assembly 170. The sensing module assembly 200 is provided to measure the state of the battery cell 150. For example, the sensing module assembly 200 may measure the operating state of the battery cell 150, but the present disclosure is not limited thereto. The sensing module assembly 200 may be provided to measure the temperature and/or voltage of the battery cell 150. A portion of the sensing module assembly 200 may extend toward the battery cell 150 by penetrating through a sensor installation opening SH formed in the busbar assembly 170. A detailed configuration of the sensing module assembly 200 will be described later.

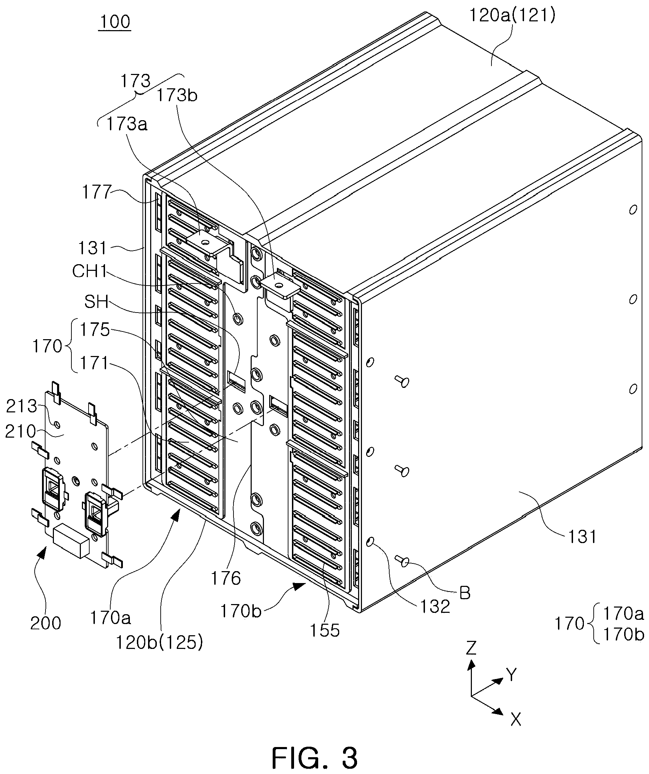

FIG. 3 is a perspective view illustrating a state in which the end plate 135 and the insulating member (138 of FIG. 2) are removed in FIG. 1.

Referring to FIG. 3 together with FIG. 2, the busbar assembly 170 may include at least one busbar 171 and a busbar support member 175. The busbar 171 is electrically connected to electrode leads 155 of the battery cells 150. At least one busbar 171 is installed on the busbar support member 175. The busbar support member 175 may be formed of an electrically insulating material for insulation between the busbar 171 and the battery cell 150.

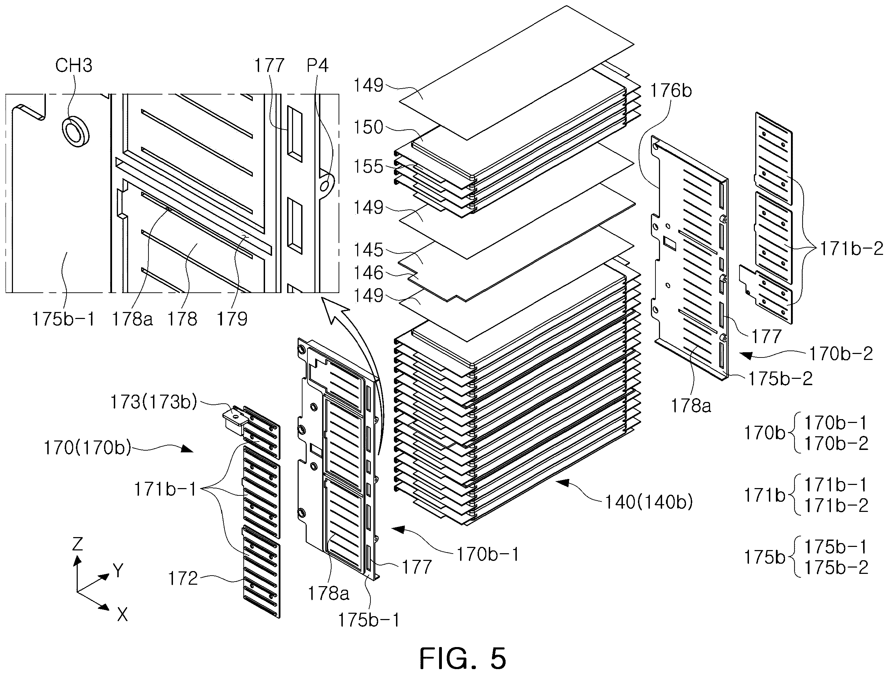

A coupling hole (172 in FIG. 5) through which the electrode lead 155 of the battery cell 150 passes may be formed in the busbar 171. The electrode lead 155 may be joined to the busbar 171 while being inserted into the coupling hole 172, to be electrically connected to the busbar 171.

The electrode terminal 173 for electrical connection with the outside may be connected to some of the busbars 171. The electrode terminal 173 may include a first electrode terminal 173a and a second electrode terminal 173b having different polarities.

The venting hole 177 for discharging gas generated from the cell stack 140 to the outside of the busbar assembly 170 may be formed in the busbar support member 175.

The sensor installation opening SH through which a portion of the sensing module assembly 200 passes may be formed in the busbar support member 175. To fix a sensing circuit board 210 of the sensing module assembly 200 to the busbar support member 175, a fastening hole CH1 may be formed in the busbar support member 175. A through-hole 213 through which the fastening unit such as a bolt passes may be formed in the sensing circuit board 210, to correspond to the fastening hole CH1.

The busbar assembly 170 may have a separate structure into a first assembly 170a electrically connected to the first stack body 140a and a second assembly 170b electrically connected to the second stack body 140b. The first assembly 170a and the second assembly 170b may have engaging shapes that are connected to each other in the first direction X through the connection part 176.

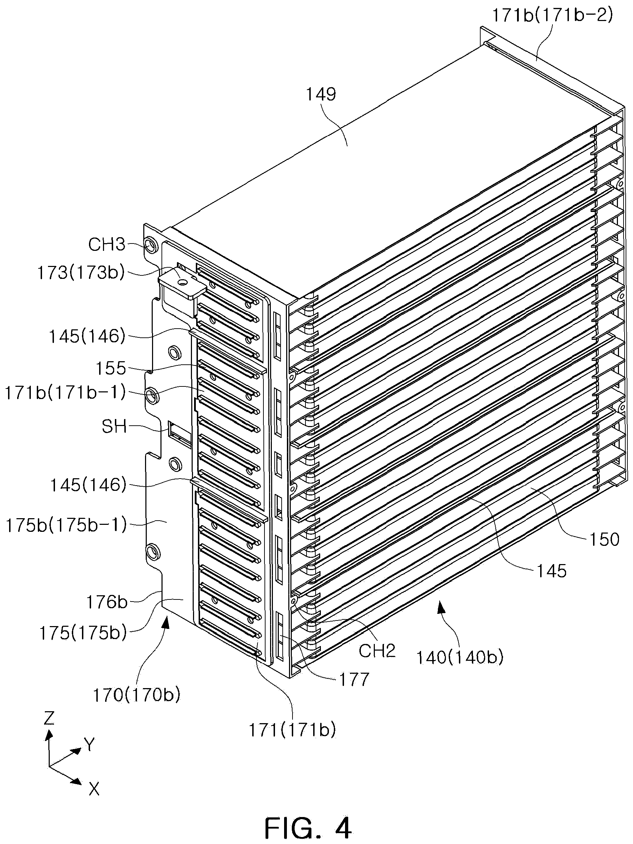

The side plate 131 may be fastened to the busbar support member 175 of the busbar assembly 170. To this end, an assembly hole 132 through which the fastening unit B such as a bolt passes is formed in the side plate 131, and a fastening hole CH2 (in FIG. 4) to which the fastening unit B is fastened may be formed in the busbar support member 175. According to the fastening between the side plate 131 and the busbar assembly 170, the rigidity of the housing 110 may be improved, and a constant distance may be maintained between the side plate 131 and the cell stack 140.

Next, the configuration of the cell stack 140 and the busbar assembly 170 will be described in more detail with reference to FIGS. 4 and 5. FIG. 4 is a separate perspective view in which the second stack body 140b of the cell stack 140 and the second assembly 170b of the busbar assembly 170 are combined in the battery module 100 illustrated in FIG. 3, and FIG. 5 is an exploded perspective view of the cell stack 140 and the busbar assembly 170 illustrated in FIG. 4. The configurations of the first stack body 140a and the second stack body 140b correspond to each other, and the configurations of the first assembly 170a and the second assembly 170b correspond to each other. Accordingly, the descriptions of the second stack body 140b and the second assembly 170b illustrated in FIGS. 4 and 5 are also applicable to the first stack body 140a and the first assembly 170a. In consideration of this point, the cell stack 140 and the busbar assembly 170 will be described with reference to the second stack body 140b and the second assembly 170b.

The cell stack 140 is formed by stacking the plurality of battery cells 150. The plurality of battery cells 150 have a shape extending in the second direction (Y) and are stacked in the third direction (Z) to form the cell stack 140. In this case, the battery cells 150 may be stacked while lying on sides thereof. For example, the cell stack 140 may be provided in a state in which the battery cells 150 are stacked such that the relatively wide surfaces of the battery cells 150 are disposed in the direction of gravity (Z) . The battery cell 150 may have a structure in which the electrode leads 155 are installed on both ends thereof in the second direction (Y) .

A heat insulating member 145 may be installed between at least portions of the battery cells 150. The heat insulating member 145 may prevent a flame or high-temperature thermal energy from propagating between the neighboring battery cells 150, thereby preventing a chain ignition phenomenon from occurring inside the cell stack 140. To this end, the heat insulating member 145 may include a material having at least one or more properties among flame retardancy, heat resistance, thermal insulation properties, and insulating properties. In this case, heat resistance may refer to a property that does not melt and does not change the shape even at a temperature of 300 degrees Celsius or more, and thermal insulation properties may refer to a property of a thermal conductivity of 1.0 W/mK or less. Flame retardancy is a property of preventing or inhibiting self-combustion when a fire source is removed, and may mean, for example, a grade of V-0 or higher in UL94 V Test. The insulating properties may mean a property that it is difficult to transmit electricity, for example, a material belonging to a Comparative Tracking Index (CTI) II group of 400V or higher, for example, in a 400V battery pack (or module) system.

For example, the heat insulating member 145 may include at least some materials among mica, silica, silicate, graphite, alumina, ceramic wool, and aerogel capable of preventing heat and/or flame propagation. However, the material of the heat insulating member 145 is not limited thereto, and a variety of known materials may be used as long as the shape may be maintained in a thermal runaway situation of the battery cell 150 and heat or flame may be prevented from propagating to other adjacent battery cells 150. In addition, the heat insulating member 145 may be formed of a heat insulating sheet, but may also be provided as a heat insulating pad.

In addition, the heat insulating member 145 may have a shape extending between the busbars 171 by penetrating through the busbar support member 175. To this end, a heat insulating member passing hole 179 through which the heat insulating member 145 passes may be formed in the busbar support member 175. In addition, the heat insulating member 145 may include an extension portion 146 penetrating through the heat insulating member passing hole 179 and extending between the busbars 171. The width of the extension portion 146 may be less than the width of the body portion of the heat insulating member 145 with respect to the first direction (X) .

The busbar 171 may be disposed to be spaced apart from the busbar support member 175 in the third direction (Z), and the extension portion 146 of the heat insulating member 145 extends in the second direction (Y), to be positioned between the busbars 171. For example, the heat insulating member 145 may be positioned between the adjacent busbars 171. The heat-resistant temperature of the heat insulating member 145 may have a higher value than the melting temperature of the busbar support member 175. Therefore, the heat insulating member 145 positioned between the busbars 171 may prevent a short circuit between the busbars 171 in a thermal runaway situation.

In detail, for example, when a thermal runaway phenomenon occurs in the battery cells 150 included in the cell stack 140, high-temperature thermal energy, gas, or flame may be generated inside the cell stack 140. Accordingly, the busbar assembly 170 adjacent to the cell stack 140 is also exposed to a high temperature environment. When the temperature of the busbar assembly 170 rises above a certain level, there is a risk that the material forming the busbar support member 175 may be deformed. For example, when the busbar support member 175 includes a material that deforms at a high temperature of 200 degrees Celsius or more, and when the battery cell 150 ignites, the busbar support member 175 may melt and the busbar support member may no longer structurally support the busbar 171. In this case, the adjacent busbars 171 may come into contact with each other to cause an electrical short, which may cause a chain ignition of the cell stack 140. In more detail, in the case in which the busbars 171 are arranged side by side in the third direction Z, which is the direction of gravity, in the battery module 100; as the busbar support member 175 collapses, the busbars 171 collapse in the third direction (Z), which is the direction of gravity, and the risk of a short circuit between the busbars 171 further increases. In an embodiment of the present disclosure, the heat insulating member 145 is configured to be positioned between the busbars 171, and the heat resistance temperature of the heat insulating member 145 has a value greater than the melting temperature of the busbar support member 175. Accordingly, in an embodiment, the extension portion 146 of the heat insulating member 145 may prevent a short circuit between the busbars 171 even in a high-temperature environment such as a thermal runaway situation or the like.

On the other hand, at least one compressible pad 149 may be installed between at least some of the battery cells 150. Since the compressible pad 149 is compressed and elastically deformed when a specific battery cell 150 is expanded, the expansion of the entire volume of the cell stack 140 may be suppressed. To this end, the compressible pad 149 may be formed of a polyurethane material, but the material or structure is not limited thereto. The compressible pad 149 may have a size corresponding to the relatively wide surface of the battery cell 150, but the size may be variously changed.

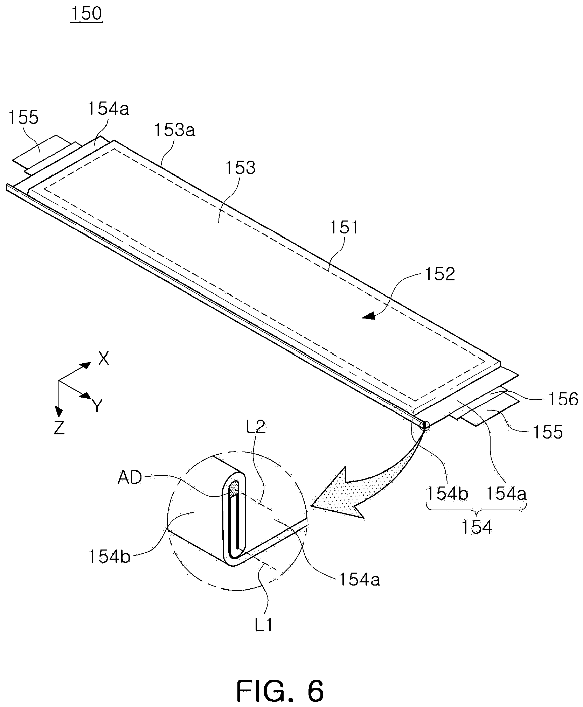

The compressible pad 149 may be installed to contact the heat insulating member 145. The compressible pad 149 may have a structure separate from the heat insulating member 145, but a structure in which the compressible pad 149 and the heat insulating member 145 are integrated may also be applied thereto. In addition, the compressible pad 149 may be disposed on both surfaces of the heat insulating member 145 as illustrated in FIGS. 5 and 6, but may be disposed only on one side of both surfaces of the heat insulating member 145.

On the other hand, the compressible pad 149 may be installed separately from the heat insulating member 145. For example, the compressible pad 149 may be installed outside an uppermost and/or lowermost battery cells 150 among the battery cells 150. In this case, the compressible pad 149 is positioned between the battery cell 150 and the first plate (121 in FIG. 2) or between the battery cell 150 and the second plate (122 in FIG. 2). The installation position and number of the heat insulating member 145 and the compressible pad 149 may be variously changed. For example, only the compressible pad 149 may be installed between portions of the battery cells 150, and only the heat insulating member 145 may be installed between other portions of the battery cells 150.

The busbar assembly 170 may include a plurality of busbars 171 to which the electrode leads 155 of the battery cell 150 are electrically connected, and a busbar support member 175 for supporting the plurality of busbars 171. The busbars 171 may have a coupling hole 172 to which the electrode leads 155 are connected. The busbar 171 is installed on a seating portion 178 formed on the busbar support member 175. An electrode lead passing hole 178a through which the electrode lead 155 passes may be formed in the seating portion 178. In addition, the busbar support member 175 may have the heat insulating member passing hole 179 through which the heat insulating member 145 passes, the venting hole 177 for discharging gas, an assembly hole CH3 used for coupling the busbar support member 175 and the partition member 123, and the fastening hole CH2 used for coupling the busbar support member 175 and the side plate 131. The sensor installation opening SH for installation of the sensing module assembly 200 (refer to FIG. 3) may be formed in the busbar support member 175. The temperature sensing module 200 may extend to the inside of the busbar support member 175 through the sensor installation opening SH, and thus may sense the temperature of the battery cell 150.

The battery cell 150 may have a structure in which electrode leads 155 are respectively installed on both ends in the second direction (Y) . Accordingly, the busbar assembly 170 may be provided on both sides of the cell stack 140 in the second direction Y, respectively. For example, in the cell stack 140, a second front assembly 170b-1 and a second rear assembly 170b-2 may be provided on both ends of the second stack body 140b, respectively. The second front assembly 170b-1 may be positioned on one side of the second stack body 140b, and the second rear assembly 170b-2 may be positioned on the other side of the second stack body 140b.

The second front assembly 170b-1 may include a second front busbar 171b-1 and a second front support member 175b-1. The second front busbar 171b-1 may include a second electrode terminal 173b for electrical connection with the outside. The second rear assembly 170b-2 may include a second rear busbar 171b-2 and a second rear support member 175b-2.

The second assembly 170b may include a second connection part 176b connected to the first connection part (176a of FIG. 2) of the first assembly (170a of FIG. 2) . The second connection part 176b has a shape in which grooves and protrusions are repeated. The first connection part (176a in FIG. 2) may also have a shape corresponding to the second connection part 176b.

FIG. 6 is a perspective view of the battery cell 150 illustrated in FIG. 5.

The battery cell 150 according to an embodiment may be confilgured as a pouch type secondary battery. However, in an embodiment, the battery cell 150 is not limited to a pouch-type secondary battery. For example, the battery cell 150 may be configured as a prismatic can-type secondary battery, or may have a configuration in which a plurality of pouch-type secondary batteries are grouped to be formed as a bundle. For convenience of description, a pouch-type secondary battery will be described as an example of the battery cell 150.

The battery cell 150 may be divided into a cell body part 153 and a sealing part 154.

The cell body part 153 provides an internal space in which the electrode assembly 151 and the electrolyte (not illustrated) are accommodated. The electrode assembly 151 includes a plurality of electrode plates and electrode tabs and is accommodated in a pouch 152. The electrode plate is comprised of a positive plate and a negative plate. The electrode assembly 151 may have a form in which a positive electrode plate and a negative electrode plate are stacked with a separator interposed therebetween, in such a manner that relatively wide surfaces of the positive and negative plates face each other. The plurality of positive plates and the plurality of negative plates are respectively provided with electrode tabs. The electrode tabs may be in contact with each other with the same polarity, and may be connected to the electrode leads 155 of the same polarity.

The sealing part 154 is joined to at least a portion of the circumference of the cell body part 153 to form a sealed space inside the pouch 152. The sealing part 154 is formed in the form of a flange extending outwardly from the cell body part 153 formed as the container shape, and disposed along the periphery of the cell body part 153. A heat-sealing method may be used for bonding the pouch 152 to form the sealing part 154, but is not limited thereto.

In an embodiment, the sealing part 154 may be divided into a first sealing part 154a formed in a portion where the electrode lead 155 is disposed, and a second sealing part 154b formed in a portion where the electrode lead 155 is not disposed.

The pouch 152 is formed in a container shape to provide an internal space in which the electrode assembly and the electrolyte are accommodated. The pouch 152 may be formed by forming a single sheet of casing. In more detail, after forming one or two accommodating parts in a single sheet of casing, the accommodating parts may form one space (e.g., the cell body part 153).

The cell body part 153 may be formed in a quadrangular shape. A sealing part 154 formed by bonding a casing is provided on the outer periphery of the cell body part 153. However, it is not necessary to form the sealing part 154 on the surface on which the casing is folded. Therefore, in the present embodiment, the sealing part 154 is provided on only three surfaces of the outer periphery of the cell body part 153, and a contact surface 153a on which the sealing part 154 is not disposed may be formed on any one surface of the outer periphery of the cell part 153.

In an embodiment, the electrode leads 155 may be disposed on opposite sides of the cell body part 153 to face in opposite directions. In this case, the sealing part 154 may include two first sealing parts 154a in which the electrode leads 155 are disposed, and one second sealing part 154b in which the electrode leads 155 are not disposed.

An insulating film 156 may be disposed between the pouch 152 and the electrode lead 155 in the first sealing part 154a. The insulating film 156 functions to increase the sealing degree in the position in which the electrode lead 155 is led out and to secure an insulating state simultaneously therewith. The insulating film 156 may have a shape in which a portion is exposed to the outside of the pouch 152.

In an embodiment, to increase the bonding reliability of the sealing part 154 and significantly reduce the area of the sealing part 154, the portion of the sealing part 154 in which the electrode lead 155 is not disposed may be formed folded at least once. The second sealing part 154b may have a shape folded twice. For example, the second sealing part 154b may be formed by being folded by 180° along a first bending line L1 and then again folded along a second bending line L2. In this case, the inside of the second sealing part 154b may be filled with an adhesive member AD, and the second sealing part 154b may be maintained in a shape folded twice by the adhesive member AD. The adhesive member AD may be formed of an adhesive having high thermal conductivity. For example, the adhesive member AD may be formed of epoxy or silicone, but is not limited thereto.

On the other hand, in an embodiment of the present disclosure, the pouch 152 is not limited to a structure in which the sealing part 154 is formed on three sides by folding a sheet of casing as illustrated in FIG. 6. For example, the cell body part 153 may be formed by overlapping two sheets of casings, and the sealing part 154 may be formed on all four surfaces around the cell body part 153.

In addition, in the case of the battery cell 150 illustrated in FIG. 6, the two electrode leads 155 are illustrated as being disposed on both sides of the cell body part 153 to face in opposite directions, but two electrode leads 155 may also be disposed on one side of the battery cell 150.

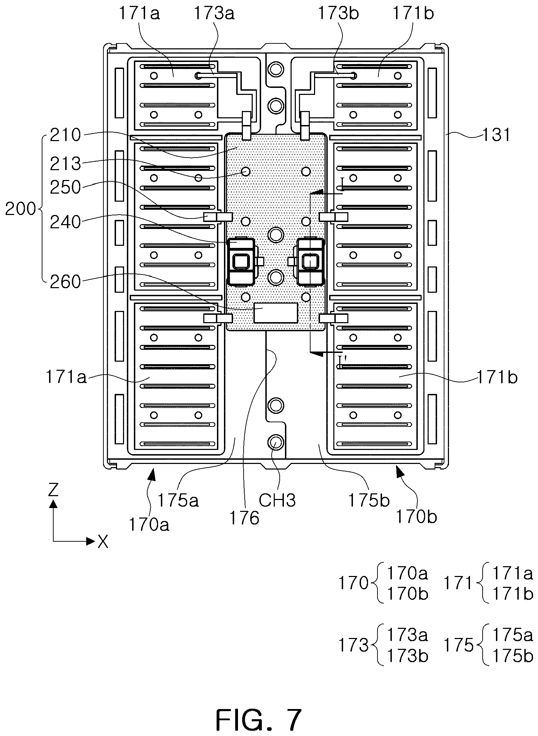

Next, the sensing module assembly 200 according to an embodiment will be described with reference to FIGS. 7 to 13.

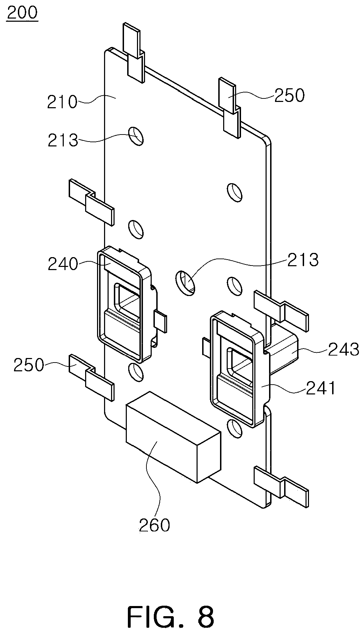

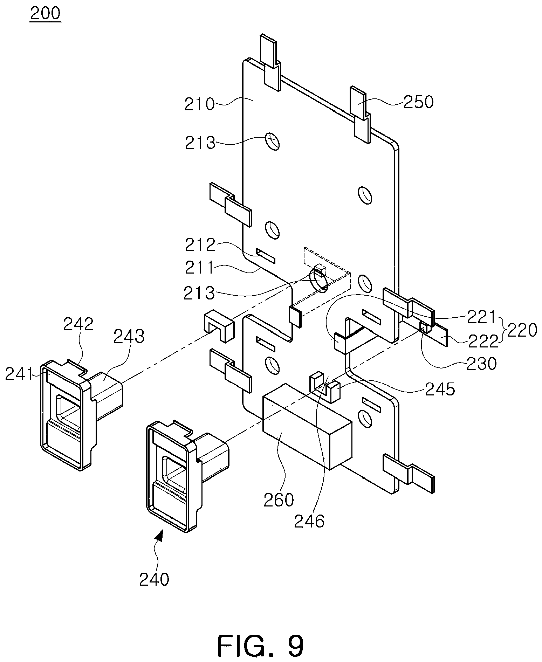

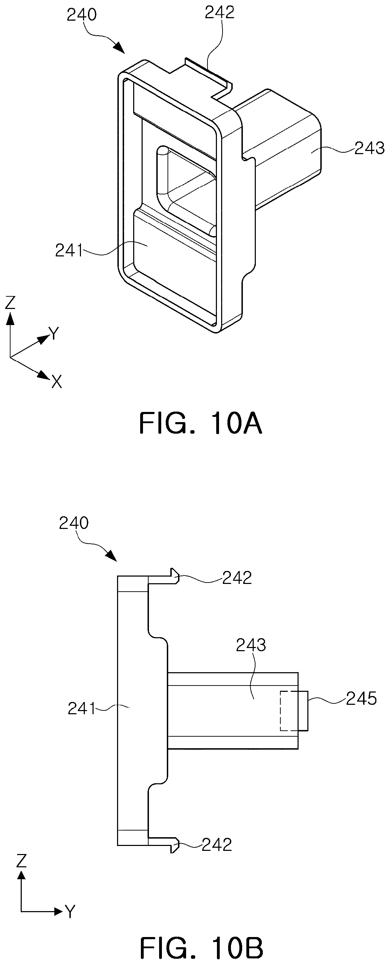

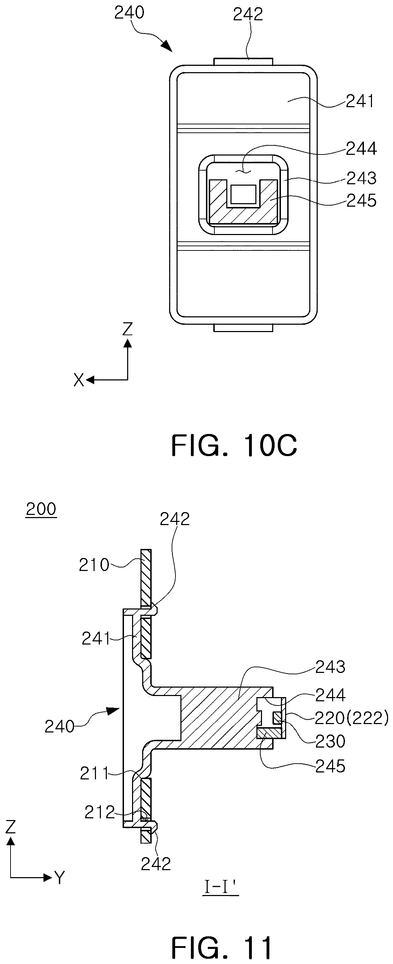

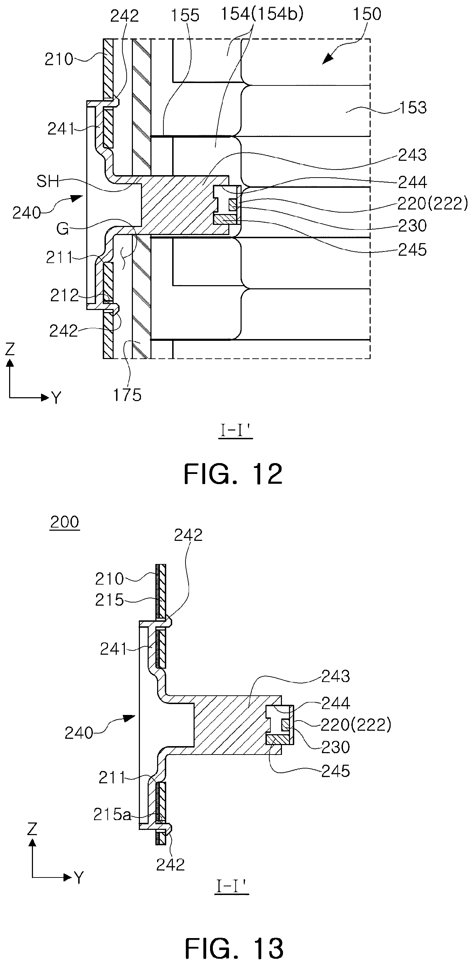

FIG. 7 is a front view of the battery module 100 illustrated in FIG. 3, FIG. 8 is a perspective view of the sensing module assembly illustrated in FIG. 3, and FIG. 9 is an exploded perspective view of the sensing module assembly illustrated in FIG. 8. FIGS. 10A, 10B, and 10C are a perspective view, a side view, and a rear view of the sensor fixing member illustrated in FIG. 8, respectively, and FIG. 11 is a cross-sectional view of the sensing module assembly taken along line I-I' of FIG. 7. FIG. 12 is a cross-sectional view of the battery module taken along line I-I' of FIG. 7, and FIG. 13 is a cross-sectional view illustrating a modified example of the sensing module assembly illustrated in FIG. 11.

Referring to FIG. 7, the sensing module assembly 200 according to an embodiment is provided to measure the state of the battery cell (150 in FIG. 5) . For example, the sensing module assembly 200 may be used to measure an operating state of a battery cell. The sensing module assembly 200 may be connected to a battery management system (BMS) and the like to control the temperature of the battery cells, prevent overcharging of the battery cells, or perform voltage balancing. Referring to FIG. 3 together, the sensing module assembly 200 may be installed in a state in which the installation of the first assembly 170a and the second assembly 170b is completed. The busbar assembly 170 is disposed to cover the cell stack, and the sensing module assembly 200 may have a structure covering at least a portion of the first assembly 170a and at least a portion of the second assembly 170b together. Accordingly, the sensing module assembly 200 may have a structure that is simultaneously fastened to the first assembly 170a and the second assembly 170b.

The sensing module assembly 200 may include a sensing circuit board 210 having a circuit for detecting the state of the battery cell. The sensing circuit board 210 may include a circuit for sensing the voltage and temperature of the battery cells.

The sensing module assembly 200 may be installed adjacent to the busbar assembly 170. The sensing circuit board 210 may be coupled to the busbar support member 175 through a through-hole 213 in which a fastening unit such as a bolt is installed. The sensing circuit board 210 may be installed outside the busbar support member 175 (on the opposite side of the cell stack).

The sensing module assembly 200 may include a voltage sensing terminal 250 for measuring the voltage of the battery cell. The voltage sensing terminal 250 is electrically connected to the busbar 171 to receive the voltage signal of the battery cell through the busbar 171. The voltage sensing terminal 250 may be electrically connected to the plurality of busbars 171.

In an embodiment, the busbar assembly 170 may be separated into a first assembly 170a and a second assembly 170b, the first assembly 170a may include a first busbar 171a and a first busbar support member 175a, and the second assembly 170b may include a second busbar 171b and a second busbar support member 175b. In this case, the sensing module assembly 200 may receive a voltage signal from the first busbar 171a and the second busbar 171b through a plurality of the voltage sensing terminals 250.

Referring to FIGS. 7 to 12, the sensing module assembly 200 according to an embodiment may include a sensing circuit board 210, a temperature sensor 230, a sensor connection member 220 and a sensor fixing member 240. The sensing module assembly 200 according to an embodiment may further include a voltage sensing terminal 250 and a connector 260. The sensing module assembly 200 may include a plurality of temperature sensors 230, and the number of the sensor connection members 220 and the sensor fixing members 240 may correspond to the number of the temperature sensors 230.

In an embodiment, the housing (110 in FIG. 2) may have a plurality of accommodating spaces (S: S1 and S2) partitioned by a partition member (123 in FIG. 12) to accommodate a plurality of cell stacks (140a and 140b in FIG. 2); and each of the cell stacks 140a and 140b (refer to FIG. 2) may be connected to the busbar assemblies 170a and 170b. As such, when two temperature sensors 230 are installed to correspond to the plurality of busbar assemblies 170a and 170b, the sensor connection member 220 and the sensor fixing member 240 may each be configured in two pieces.

The sensing circuit board 210 is installed to sense the state of the battery cell as described above. The sensing circuit board 210 may be coupled to the busbar support member 175, outside of the busbar assembly 170. To this end, a through-hole 213 through which a fastening unit such as a bolt passes may be formed in the sensing circuit board 210, and a fastening hole (CH1 in FIG. 3) to which a fastening unit such as a bolt is coupled may be formed in the busbar support member 175.

The temperature sensor 230 is installed in a position adjacent to the battery cell 150 to measure the temperature of the battery cell 150. For example, the temperature sensor 230 is installed to be spaced apart from the sensing circuit board 210.

The sensor connection member 220 electrically connects the sensing circuit board 210 and the temperature sensor 230 to provide a temperature value sensed by the temperature sensor 230 to the sensing circuit board 210. The sensor connection member 220 may include a circuit for connecting the sensing circuit board 210 and the temperature sensor 230.

The sensor connection member 220 may include a first end 221 to which the sensing circuit board 210 is connected, and a second end 222 on which the temperature sensor 230 is installed. The sensor connection member 220 may have a shape extending in the direction of the battery cell 150 by penetrating through an opening 211 of the sensing circuit board 210 and a sensor installation opening (SH in FIG. 12 ) formed in the busbar support member 175.

The sensor connection member 220 may have a shape or material that may be deformed such that the temperature sensor 230 may measure the temperature in a measurement position adjacent to the battery cell 150. For example, the sensor connection member 220 may be configured such that the second end 222 is deformed and thus the temperature sensor 230 or the second end 222 to which the temperature sensor 230 is fixed may be in close contact with the battery cell 150. For example, the sensor connection member 220 may be configured to include a flexible printed circuit board (FPCB) or a wire. The temperature sensor 230 may be soldered to or embedded in the second end 222 of the sensor connection member 220. The temperature sensor 230 may be configured to be in thermal contact with the battery cell 150 through the second end 222 of the sensor connection member 220. Alternatively, the temperature sensor 230 may be configured to be in direct contact with the battery cell 150.

The sensor fixing member 240 is fixed to the sensing circuit board 210, and is used for installation of the temperature sensor 230. Since the sensor connection member 220 has a deformable shape or material, the shape or position of the second end 222 on which the temperature sensor 230 is installed may be easily changed. The sensor fixing member 240 functions to facilitate handling and installation of the temperature sensor 230 by limiting the movement or deformation of the second end 222 on which the temperature sensor 230 is installed.

The sensor fixing member 240 may extend toward the temperature sensor 230 by penetrating through the sensing circuit board 210 such that the temperature sensor 230 measures a temperature at a preset position. In detail, the sensor fixing member 240 may include a fixing body 241 having a fastening part 242 fastened to the sensing circuit board 210, and an extended body 243 extending toward the temperature sensor 230 by penetrating through an opening 211 formed in the sensing circuit board 210 and the sensor installation opening (SH) formed in the busbar support member 175.

The sensor fixing member 240 may be configured to contact the second end 222 of the sensor connection member 220, on which the temperature sensor 230 is installed. For example, in the sensor fixing member 230, the end region of the extended body 243 may contact the second end 222 to press the second end 222 in the direction of the battery cell 150.

The sensor fixing member 240 may limit the movement or deformation of the second end 222 before the second end 222 of the sensor connection member 220 or the temperature sensor 230 comes into contact with the battery cell 150. For example, the second end 222 on which the temperature sensor 230 is installed may be limited in movement or deformation by the end region of the extended body 243. To this end, the second end 222 may be fixed to the end region of the extended body 243 by fitting or bonding.

The sensor fixing member 240 may further include an elastic pad 245 installed on the extended body 243 at a position facing the temperature sensor 230. The elastic pad 245 is installed on the extended body 245 on a position opposite to the temperature sensor 230. The elastic pad 245 may have a size exposed to the outside of the extended body 245. In detail, one side of the elastic pad 245 is seated in a pad installation groove 244 formed in the end of the extended body 243, and the other side of the elastic pad 245 is extended to the outside of the extended body 243 and is elastically deformed.

Referring to FIG. 12, the elastic pad 245 is interposed between the extended body 243 and the second end 222 of the sensor connection member 220 to elastically press the second end 222 of the sensor connection member 220. Since the sensor connection member 220 has a deformable shape or material, when the sensor connection member is elastically pressed by the elastic pad 245, the sensor connection member may be in close contact with the battery cell 150. For example, since the second end 222 of the sensor connection member 220 is in close contact with the cell body part 153 of the battery cell 150, the temperature sensor 230 may accurately measure the temperature of the cell body part 153.

On the other hand, in the case in which the elastic pad 245 directly presses the temperature sensor 230, the temperature sensor 230 may be damaged. To prevent this, the elastic pad 245 may have an opening 246 surrounding at least a portion of the circumference of the temperature sensor 230. The opening 246 may have a groove shape in which one side is open, but may also have a shape surrounding all four surfaces of the temperature sensor 230.

The sensing circuit board 210 may include a printed circuit board (PCB) having rigidity. The sensing circuit board 210 may include a coupling part 212 corresponding to the fastening part 242 of the sensor fixing member 240. The fastening part 242 of the sensor fixing member 240 may have a protrusion shape, and in this case, the coupling part 212 of the sensing circuit board 210 may have a groove shape into which the protrusion is inserted. Conversely, the fastening part 242 of the sensor fixing member 240 may have a groove shape, and the coupling part 212 of the sensing circuit board 210 may have a protrusion shape.

Referring to FIG. 12, a space (G) may be formed between the sensing circuit board 210 and the busbar support member 175 such that the fastening part 242 of the sensor fixing member 240 does not interfere with the busbar support member 175. This space G may be formed by a fastening hole (CH1 in FIG. 3) and/or the assembly hole (CH3 in FIGS. 4 and 5) having a structure protruding from the plane of the busbar support member 175.

On the other hand, the sensing module assembly 200 according to an embodiment may include a connector 260 for receiving a signal regarding the state of the battery cell, for example, an operating state thereof, measured in a position different from a position of the temperature sensor 230 connected to the sensing circuit board 210 through the sensor connection member 220.

The sensing module assembly 200 illustrated in FIG. 13 illustrates a modified example in which the sensing circuit board 210 includes a flexible printed circuit board. When the sensing circuit board 210 is a flexible printed circuit board, the sensor fixing member 240 may not be supported by the sensing circuit board 210. The sensing module assembly 200 illustrated in FIG. 13 may include a reinforcing member 215 attached to the flexible printed circuit board, to support the sensor fixing member 240. A coupling part 215a of the reinforcing member 215 may support the fastening part 242 of the sensor fixing member 240. Configurations other than the reinforcing member 215 in the sensing module assembly 200 illustrated in FIG. 13 are the same as those of the sensing module assembly 200 described with reference to FIGS. 7 to 12, and thus, the detailed description will be omitted and replaced with the above description.

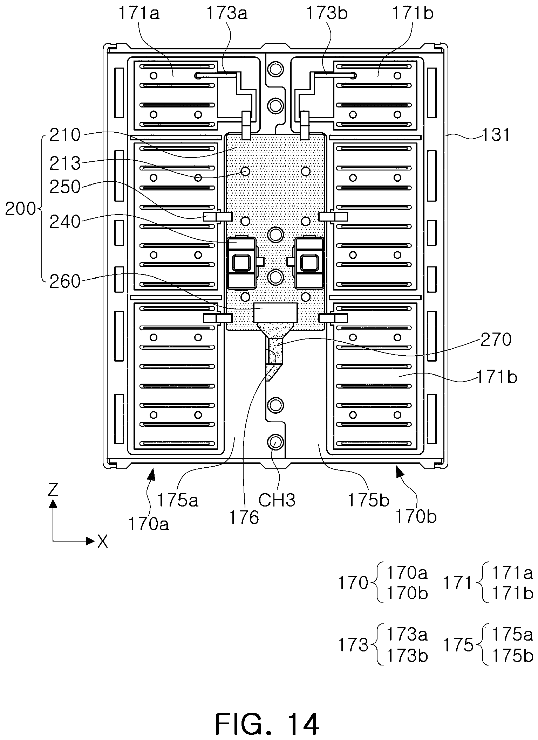

Next, a sensing module assembly according to another embodiment will be described with reference to FIG. 14. FIG. 14 is a front view of a battery module including a sensing module assembly according to another embodiment.

Referring to FIG. 14, a connector 160 may be connected to an additional connection member 270, to receive a signal regarding the state of the battery cell measured in a position different from a position of the temperature sensor 230 illustrated in FIGS. 9 and 11 to 13.

The busbar assembly 170 may be positioned on both sides of the battery cell 150 in the longitudinal direction, respectively. In this case, the additional connection member 270 may extend toward the cell stack (140 in FIG. 2) through the connection part 176 to receive (a signal regarding) the state of the battery cell measured at the position opposite to the busbar assembly 170 on which the sensing circuit board 210 is installed. One side of the additional connection member 270 may be connected to the connector 260, and the other side thereof may be connected to a temperature sensor and/or a voltage sensing terminal adjacent to the opposite busbar assembly.

The additional connection member 270 may have a deformable shape or material similar to the sensor connection member 220. For example, the additional connection member 220 may include a flexible printed circuit board (FPCB) or a wire.

In the sensing module assembly 200 illustrated in FIG. 14, the configuration other than the additional connection member 270 is the same as the sensing module assembly 200 described with reference to FIGS. 7 to 12, and thus, the detailed description will be omitted and replaced with the above description.

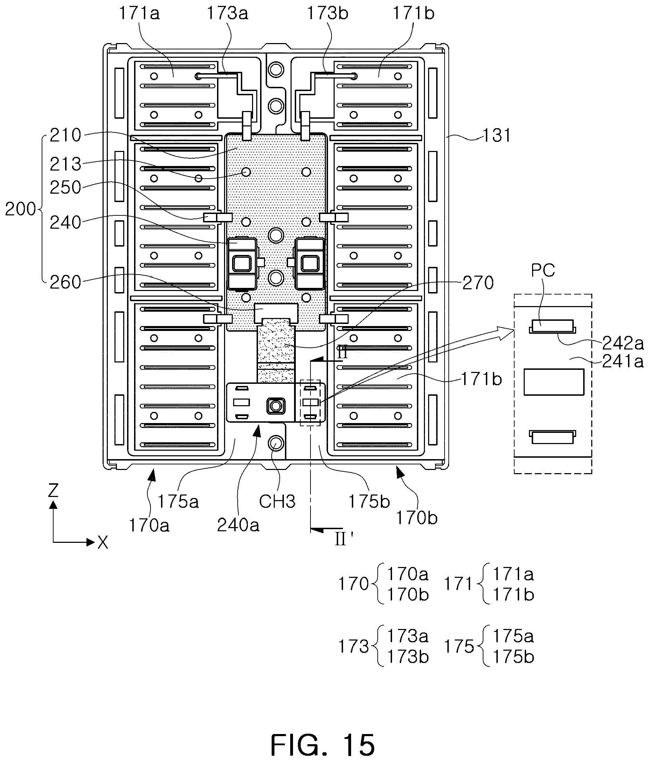

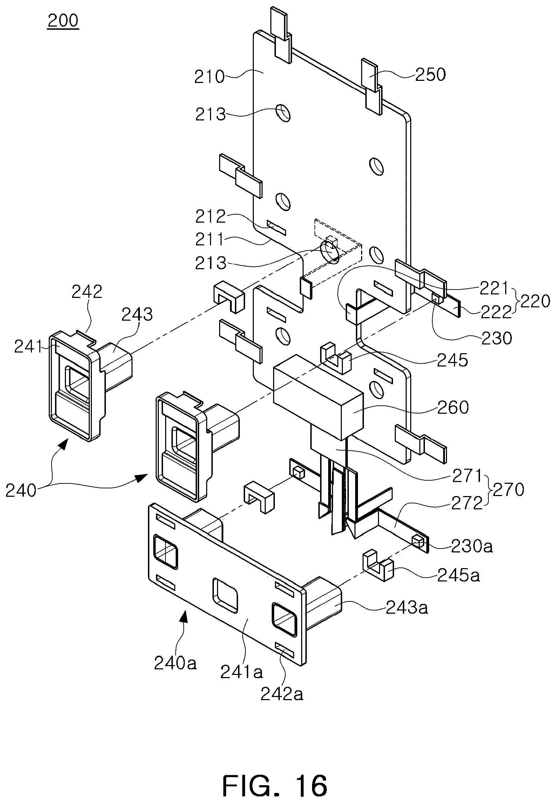

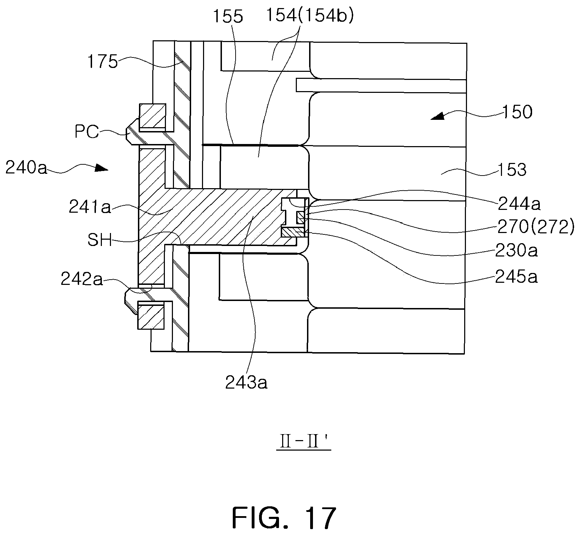

Next, a sensing module assembly 200 according to another embodiment will be described with reference to FIGS. 15 to 17. FIG. 15 is a front view of a battery module including a sensing module assembly according to another embodiment, FIG. 16 is an exploded perspective view of the sensing module assembly illustrated in FIG. 15, and FIG. 17 is a cross-sectional view of a battery module taken along line II-II' of FIG. 15.

In an embodiment illustrated in FIGS. 15 to 17, the sensing module assembly 200 may further include an additional connection member 270 connected to the connector 260, an additional temperature sensor 230a installed on the additional connection member 270, and an additional fixing member 240a for installation of the additional temperature sensor 230a.

The additional temperature sensor 230a may measure the temperature of the battery cell disposed at a position different from that of the above-described temperature sensor 230. As such, when the number of temperature measurement points increases through the temperature sensor 230 and the additional temperature sensor 230a, the temperature control of the battery cell may be more accurately performed.

The additional connection member 270 connects the connector 260 and the additional temperature sensor 230a. The additional connection member 270 may include a first end 271 to which the connector 260 is connected, and a second end 272 on which the additional temperature sensor 230a is installed.

The additional connection member 270 may have a deformable shape or material similar to the sensor connection member 220. Since the specific configuration of the additional connection member 270 is substantially the same as that of the sensor connection member 220, a detailed description thereof will be omitted.

The additional fixing member 240a is used for installation of the additional temperature sensor 230a. Since the additional connection member 270 has a deformable shape or material, the shape or position of the second end 272 in which the additional temperature sensor 230a is installed may be easily changed. The additional fixing member 240a functions to facilitate handling and installation of the additional temperature sensor 230a by limiting the movement or deformation of the second end 272 on which the additional temperature sensor 230a is installed.

The additional fixing member 240a may include a fixing body 241a having a fastening part 242a fastened to the busbar support member 175, and an extended body 134a extending toward the additional temperature sensor 230a by penetrating through the sensor installation opening SH formed in the busbar support member 175.

The fastening part 242 of the additional fixing member 240a may be coupled to a coupling part PC of the busbar support member 175. The fastening part 242 of the additional fixing member 240a may have a groove shape, and in this case, the coupling part PC of the busbar support member 175 may have a protrusion shape corresponding to the groove. Conversely, it is also possible that the fastening part 242 of the additional fixing member 240a has a protrusion shape, and the coupling part PC of the busbar support member 175 has a groove shape.

The additional fixing member 240a may restrict movement or deformation of the second end 272 of the additional connection members 270, on which the additional temperature sensor 230a is installed, before the additional connection member 270 or the additional temperature sensor 230a comes into contact with the battery cell. For example, the second end 272 on which the additional temperature sensor 230a is installed may be limited in movement or deformation by the end region of the extended body 243a. To this end, the second end 272 may be fixed to the end region of the extended body 243a by fitting or bonding.

The additional fixing member 240a may further include an elastic pad 245a installed on the extended body 243a at a position facing the additional temperature sensor 230a. The elastic pad 245a is installed on a position opposite to the additional temperature sensor 230a. Since the detailed configuration of the elastic pad 245a is the same as that of the aforementioned elastic pad 245, a detailed description thereof will be omitted.

As described above, according to an embodiment, the temperature sensors 230 and 230a may be easily installed through the configuration of the sensing module assembly 200. In detail, since the temperature sensors 230 and 230a may be accurately positioned at the temperature measurement position, the accuracy of the temperature measurement of the battery cell may be increased.

In addition, even when the cell stack 140 is covered by the busbar assembly 170, the temperature sensors 230 and 230a may be installed by forming a small sensor installation opening SH in the busbar support member 175. For example, since the sensor installation opening SH has a size small enough to allow the sensor fixing member 240 and/or the additional fixing member 240a to be inserted, even when the sensor installation opening SH is formed, a decrease in rigidity of the busbar support member 175 may be significantly reduced.

In addition, according to an embodiment, even when the cell stack 140 is disposed on both sides of the partition member 123 and the temperature sensors 230 and 230a need to be installed in a position adjacent to the partition member 123, the installation of the temperature sensor may be facilitated.

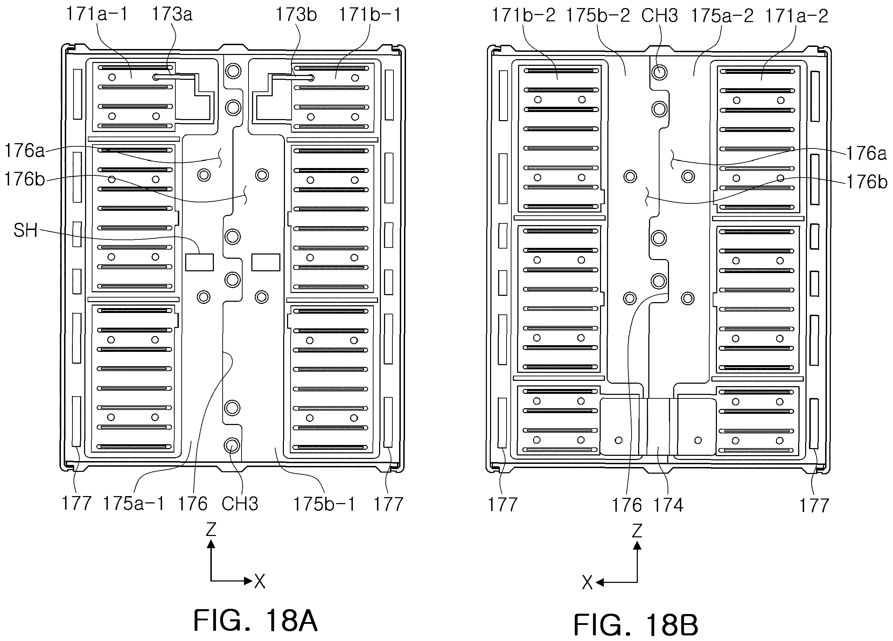

Next, the busbar assembly 170 will be described with reference to FIGS. 18A and 18B. FIGS. 18A and 18B are views illustrating a state in which the busbar assembly 170 is installed in the battery module 100 illustrated in FIG. 3. FIG. 18A is a front view and FIG. 18B is a rear view.

Referring to FIGS. 2, 3, and 18 together, the busbar assembly 170 may include a first assembly 170a and a second assembly 170b. The first assembly 170a is electrically connected to the first stack body 140a, and the second assembly 170b is electrically connected to the second stack body 140b.

In the case of a battery module of the related art having an I-shaped frame, a plurality of cell stacks and one busbar assembly are electrically connected in a state in which the cell stacks are respectively installed on both sides of the partition wall. In the case of a battery module according to the related art, since an assembly tolerance occurs while the cell stack is pre-installed in the module housing, in the case in which a plurality of cell stacks are connected by one busbar assembly, the busbar connection process may be difficult. Moreover, there is a problem in that the production yield is lowered due to an increase in the occurrence of defective welding between the electrode lead of the battery cell and the busbar.

However, in an embodiment of the present disclosure, before disposing the first stack body 140a and the second stack body 140b in the accommodating space of the frame member 120, the first assembly 170a and the second assembly 170b are electrically connected to the first stack body 140a and the second stack body 140b, respectively. Therefore, compared to the related art, the electrical connection work between the cell stack body 140 (140a, 140b) and the busbar 171 may be facilitated, and there is little possibility of welding defect occurring. For example, in the case of an embodiment of the present disclosure, as the busbar assembly 170 may have a structure divided into a plurality of parts, the assembly efficiency may be improved in the process of assembling each busbar assembly 170 to each cell stack 140. In addition, in an embodiment, the number of battery cells 150 included in the cell stack 140 may be increased, and accordingly, the height of the cell stack 140 may be increased.

Before the busbar assembly 170 is connected to the cell stack 140, it is difficult to distinguish the shapes of the first stack body 140a and the second stack body 140b, and it is difficult to distinguish the shapes of the first stack body 140a in the front-rear direction (second direction) and the shapes of the second stack body 140b in the front-rear direction (second direction) . However, when connecting the first assembly 170a and the second assembly 170b to the first stack body 140a and the second stack body 140b, respectively, respective cell stacks 140 may be easily distinguished through the shape of the connection parts 176 (176a and 176b) engaged with each other. Accordingly, errors in the process of assembling the first assembly 170a and the second assembly 170b in the accommodating spaces S1 and S2 of the housing 110 may be prevented.

On the other hand, the cell stack 140 may be connected to the busbar assembly 170 on both ends thereof in the second direction (Y) . Accordingly, the first assembly 170a includes a first front assembly 170a-1 located on one side of the first stack body 140a in the second direction Y, and a first rear assembly 170a-2 located on the other side of the first stack body 140a in the second direction. The second assembly 170b may include a second front assembly 170b-1 positioned on one side of the second stack body 140b in the second direction (Y), and a second rear assembly 170b-2 located on the other side of the second stack body 140b in the second direction (Y).

Also, the first front assembly 170a-1 and the second front assembly 170b-1 may include electrode terminals 173a and 173b electrically connected to the outside, respectively. The first front assembly 170a-1 may include a first electrode terminal 173a connected to at least one busbar 171 among the plurality of busbars 171, and the second front assembly 170b-1 may include a second electrode terminal 173b connected to at least one busbar among the plurality of busbars 171.

The first rear assembly 170a-2 and the second rear assembly 170b-2 may be electrically connected by a bridge busbar 174. The bridge busbar 174 may electrically connect at least one of the plurality of busbars 171 provided in the first rear assembly 170a-2, and at least one of the plurality of busbars 171 provided in the second rear assembly 170b-2, to each other. The bridge busbar 174 may bypass the partition member (128 in FIG. 13) and may be connected to the busbar 171 of the first rear assembly 170a-2 and the busbar 171 of the second rear assembly 170b-2.

In an embodiment, the first stack body 140a and the first assembly 170a are electrically connected to each other, and the second stack body 140b and the second assembly 170b are electrically connected to each other, to be disposed in the frame member in a state in which 120 may be disposed. Accordingly, the first assembly 170a and the second assembly 170b may be electrically connected through the bridge busbar 174.

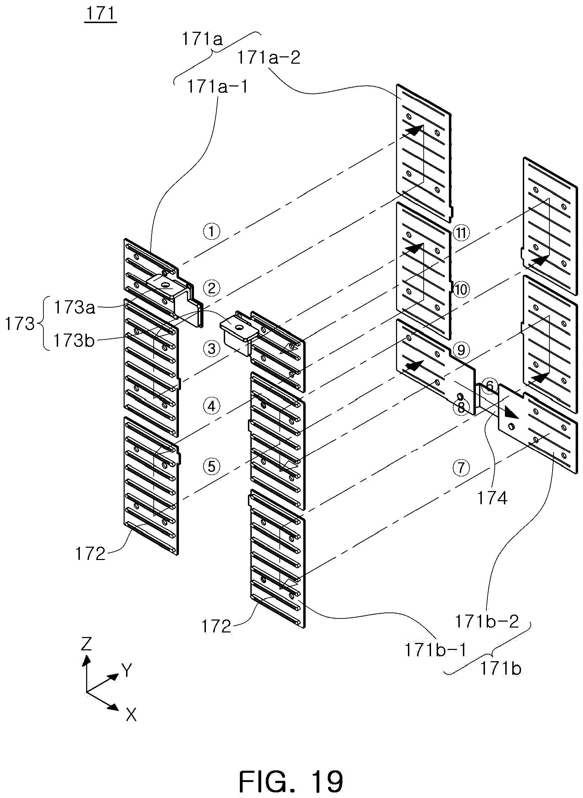

An electrical connection relationship between the busbar assembly 170 and the busbar 171 will be described with reference to FIG. 19. FIG. 19 is an illustrative diagram illustrating an electrical connection relationship between a plurality of busbars 171 in FIGS. 18A and 18B. For clarity of illustration, the battery cells 150 connected between the busbars 171 are omitted.

As illustrated in FIG. 19, the first front busbar 171a-1 and the first rear busbar 171a-2 connected to the first electrode terminal 173a are electrically connected to each other by a battery cell 150 (not illustrated) . Accordingly, electrical flows indicated by ① to ⑤ are sequentially performed between the first front busbar 171a-1 and the first rear busbar 171a-2. Between the first rear busbar 171a-2 and the second rear busbar 171b-2, an electrical flow indicated by ⑥ is performed by the bridge busbar 174. Between the second rear busbar 171b-2 and the second front busbar 171b-1, electrical flows indicated by ⑦ to ⑪ are sequentially performed.

In this manner, the first electrode terminal 173a, the first front busbar 171a-1, the first rear busbar 171a-2, the bridge busbar 174, the second rear busbar 171b-2, the second front busbar 171b-1, and the second electrode terminal 173b are sequentially electrically connected. The first electrode terminal 173a and the second electrode terminal 173b are used for electrical connection with the outside of the battery module 100.

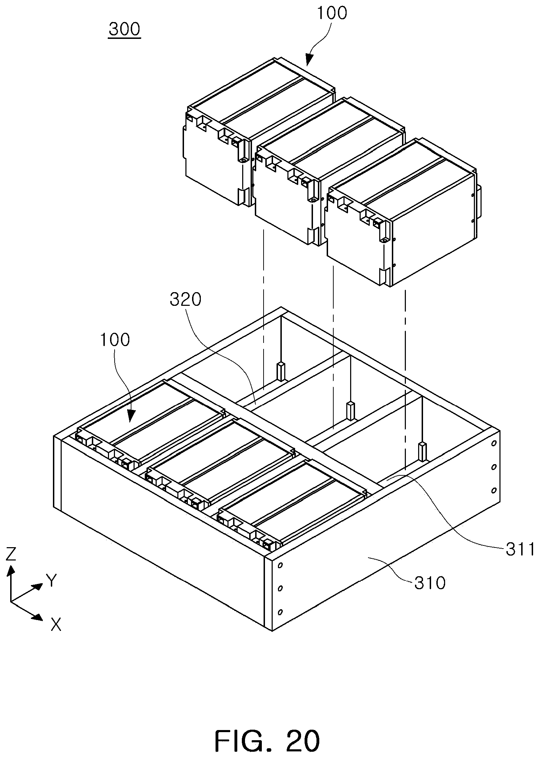

Finally, a battery pack 300 according to an embodiment will be described with reference to FIG. 20. FIG. 20 is a perspective view of the battery pack 300 according to an embodiment. The battery pack 300 of FIG. 20 is illustrated in a state in which a pack cover (not illustrated) covering the upper end of a pack case 310 is omitted.

The battery pack 300 may include the aforementioned battery module 100 and the pack case 310 accommodating the plurality of battery modules 100. The pack case 310 includes an installation space 311 for accommodating the battery module 100. The installation space 311 of the pack case 310 may be divided into a plurality of spaces by a partition wall 320.

The partition wall 320 may have a structure connected to the inner wall of the pack case 310 to improve the strength of the pack case 310. The partition wall 320 divides the space in which the battery module 100 is installed, and may function as blocking the thermal runaway phenomenon from propagating to the neighboring battery module 100 even if a thermal runaway phenomenon occurs in any one battery module 100.

In addition, the partition wall 320 may perform a heat dissipation and/or cooling function for discharging heat generated in the battery module 100 to the outside thereof. For example, the partition wall 320 may be disposed to contact the two adjacent battery modules 100 to perform cooling of the two adjacent battery modules 100.

Although the embodiments have been described in detail above, the present disclosure is not limited thereto, and various modifications and variations are possible, which will be apparent to those of ordinary skill in the art.

In addition, it may be implemented by deleting some components in the above-described embodiment, and each embodiment may be implemented in combination with each other.

In detail, in the above-described embodiment, an I-shaped frame in which two accommodating spaces (S; S1 and S2) are formed based on the partition member 123 is described as an example. However, in an embodiment, the partition member 123 may not be included, and it is also possible that one accommodating space S is formed in the housing 110.

As set forth above, according to an embodiment having such a configuration, the temperature sensor may be accurately positioned in the temperature measurement position.

In addition, according to an embodiment, the accuracy of the temperature measurement of the battery cell may be increased.

According to an embodiment, the assembly and installation of the temperature sensor may be facilitated.

In addition, according to an embodiment, the handling of the temperature sensor may be facilitated.

According to an embodiment, since the size of the sensor installation opening may be reduced, the decrease in rigidity of the busbar assembly may be significantly reduced.

## Claims

1. A battery module comprising:
at least one cell stack including a plurality of battery cells;
a housing in which at least one accommodating space is provided to accommodate the at least one cell stack;
a busbar assembly including at least one busbar electrically connected to the plurality of battery cells, and a busbar support member disposed between the busbar and the cell stack to support the busbar; and
a sensing module assembly provided to measure a state of the battery cell,
wherein the sensing module assembly comprises,
a sensing circuit board having a circuit provided for detecting the state of the battery cell,
a temperature sensor installed to be spaced apart from the sensing circuit board to measure a temperature of the battery cell,
a sensor connection member connecting the sensing circuit board and the temperature sensor, and
a sensor fixing member connected to the busbar support member in such a manner that the temperature sensor measures a temperature in a preset position.

2. The battery module of claim 1, wherein the sensor fixing member is in contact with a portion of the sensor connection member, in which the temperature sensor is installed.

3. The battery module of claim 1, wherein the sensor fixing member is installed by penetrating through a sensor installation opening provided in the busbar support member.

4. The battery module of claim 3, wherein the sensor connection member has a deformable shape or material,
the sensor connection member includes a first end to which the sensing circuit board is connected and a second end on which the temperature sensor is installed, and
the sensor fixing member is configured to limit movement or deformation of the second end before the second end or the temperature sensor contacts the battery cell.

5. The battery module of claim 1, wherein the sensor connection member includes a flexible printed circuit board or a wire.

6. The battery module of claim 4, wherein the sensor fixing member includes a fixing body having a fastening part fastened to the sensing circuit board, and an extended body extending toward the temperature sensor by penetrating through the sensor installation opening.

7. The battery module of claim 6, wherein the sensor fixing member further includes an elastic pad installed on the extended body at a position facing the temperature sensor,
wherein the elastic pad elastically presses the second end.

8. The battery module of claim 7, wherein the elastic pad has an opening surrounding at least a portion of a circumference of the temperature sensor.

9. The battery module of claim 7, wherein the elastic pad is installed on the extended body, and has a size exposed to the outside of the extended body.

10. The battery module of claim 6, wherein the sensing circuit board includes a printed circuit board,
wherein the sensing circuit board includes a coupling portion corresponding to the fastening part.

11. The battery module of claim 6, wherein the sensing circuit board includes a flexible printed circuit board,
wherein the sensing circuit board is provided with a reinforcing member attached to the sensing circuit board, to support the fastening part, and
wherein the reinforcing member includes a coupling portion corresponding to the fastening part.

12. The battery module of claim 1, wherein the sensing module assembly further includes a connector configured to receive a state of a battery cell measured on a location different from a location of the temperature sensor.

13. The battery module of claim 12, wherein the sensing module assembly includes,
an additional temperature sensor measuring a temperature of the battery cell in a position different from a location of the temperature sensor;
an additional connecting member connecting the connector and the additional temperature sensor; and
an additional fixing member fixed to the busbar support member and used for installing the additional temperature sensor.

14. The battery module of claim 13, wherein the additional fixing member includes a fixing body having a fastening part fastened to the busbar supporting member, and an extended body extending toward the additional temperature sensor by penetrating through a sensor installation opening provided in the busbar supporting member.

15. The battery module of claim 1, wherein the sensing module assembly further includes a voltage sensing terminal connecting the sensing circuit board and the at least one busbar.
